# EUROPÄISCHE PATENTSCHRIFT

(11) **EP 0 724 987 B1**
(45) Veröffentlichungstag und Bekanntmachung des Hinweises auf die Patenterteilung: **06.05.1998**
(21) Anmeldenummer: 96101365.3
(22) Anmeldetag: 31.01.1996
(51) Int. Cl.: B60R 22/46

(54) **Vorrichtung zum Drehantrieb einer Wickelwelle eines Sicherheitsgurtaufrollers**
Driving device for the rotation of the axis of a safety belt spool
Dispositif d'entraînement en rotation de l'axe d'enroulement d'un enrouleur de ceinture de sécurité

(30) Priorität: 01.02.1995 DE 19503176
(43) Veröffentlichungstag der Anmeldung: 07.08.1996
(73) Patentinhaber: HS Technik und Design Technische Entwicklungen GmbH, 82234 Wessling (DE)
(72) Erfinder: Specht, Martin, D-82340 Feldafing (DE)
(74) Vertreter: Nöth, Heinz, Dipl.-Phys.

(56) Entgegenhaltungen:
- EP-A- 0 629 531

## Beschreibung

Die Erfindung betrifft eine Vorrichtung nach dem Oberbegriff des Patentanspruches 1.

Bei einer derartigen, aus der EP 0 629 531 A1 bekannten Vorrichtung sind für den Drehantrieb einer Wickelwelle wenigstens zwei, in zeitlicher Aufeinanderfolge pyrotechnisch antreibbare Antriebskörper vorgesehen, die jeweils in kraftschlüssige Antriebsverbindungen mit der Wickelwelle in der zeitlichen Aufeinanderfolge gebracht werden können. Hierzu sind entsprechende Führungsvorrichtungen am Aufrollautomaten vorgesehen.

Die kraftschlüssige Antriebsverbindung zwischen den Antriebskörpern und der Wickelwelle wird bevorzugt durch einen formschlüssigen Eingriff, beispielsweise durch Verzahnungen an den Antriebskörpern und einem Zahnrad (Ritzel), mit welchem die Antriebskörper bei ihrem jeweiligen Antrieb in der zeitlichen Aufeinanderfolge in antreibenden Eingriff kommen, gebildet.

Aufgabe der Erfindung ist es, bei einer Vorrichtung der eingangs genannten Art die kraftschlüssige Antriebsverbindung der Antriebskörper mit der Wickelwelle mit einem Minimum an Leistungsverlust herzustellen.

Diese Aufgabe wird erfindungsgemäß durch das Kennzeichen des Patentanspruches 1 gelöst.

Bei der Erfindung wird ein Teil der Antriebsbewegung, insbesondere das Ende der Antriebsbewegung des jeweils gerade angetriebenen Antriebskörpers auf den zeitlich nachfolgend angetriebenen Antriebskörper in der Weise übertragen, daß dieser synchron in kraftschlüssige Antriebsverbindung mit der angetriebenen, sich drehenden Wickelwelle kommt. Auf diese Weise wird die Antriebsbewegung, insbesondere das Ende der Antriebsbewegung des gerade angetriebenen Antriebskörpers, der in kraftschlüssiger Antriebsverbindung mit der Wickelwelle steht, ausgenützt für die synchrone und damit leistungsverlustarme Herstellung der kraftschlüssigen Antriebsverbindung des nachfolgend angetriebenen Antriebskörpers mit der angetriebenen Wickelwelle. Diese synchrone kraftschlüssige Antriebsverbindung des zeitlich nachfolgend angetriebenen Antriebskörpers erfolgt, bevor dieser Antriebskörper vom pyrotechnischen Antriebsmittel angetrieben wird. Auf diese Weise wird erreicht, daß beim Wirksamwerden des pyrotechnischen Antriebs auf den nachfolgend angetriebenen Antriebskörper die kraftschlüssige Antriebsverbindung zwischen diesem Antriebskörper und dem kraftübertragenden Teil, beispielsweise dem Ritzel, synchron bereits hergestellt ist, so daß der pyrotechnische Antrieb ohne Leistungsverlust auf die Wickelwelle übertragen wird.

Wenn die kraftschlüssige Antriebsverbindung durch Zahneingriff erfolgt, wird dabei die Gefahr der Zahnbeschädigung beim Eingriff des nachfolgend angetriebenen Antriebskörpers gemindert bzw. beseitigt.

Das bei der Erfindung zum Einsatz kommende Bewegungsübertragungsmittel kann als drehbares Teil ausgebildet sein, das bevorzugt um die Achse des Ritzels, das als Kraftübertragungsmittel bei der Herstellung der Antriebsverbindung zwischen den Antriebskörpern und der Wickelwelle dienen kann, drehbar sein kann.

Das Kraftübertragungsmittel, insbesondere Ritzel, kann drehfest mit der Wickelwelle verbunden sein. Es kann jedoch auch Bestandteil eines Getriebes sein, durch welches die Drehbewegung des Ritzels ins Schnelle, bei der Kraftübertragung auf die Wickelwelle übersetzt wird.

Eine derartige Vorrichtung dient bevorzugt zum Straffen eines Sicherheitsgurtes in einem Kraftfahrzeug auf die Wickelwelle des Sicherheitsgurtaufrollers. Dieser Straffungsvorgang erfolgt beim Überschreiten eines bestimmten Beschleunigungswertes des Kraftfahrzeugs vor der Blockierung des Gurtbandauszugs zum Beseitigen einer Gurtlose und/oder von locker auf die Wickelwelle aufgewickelten Gurtbandlagen.

In den Figuren sind Ausführungsbeispiele der Erfindung dargestellt. Anhand dieser Figuren wird die Erfindung noch näher erläutert. Es zeigt:
- Fig. 1:: ein Ausführungsbeispiel in Längsschnitt;
und
- Fig. 2:: ein Ausführungsbeispiel in perspektivischer Darstellung.

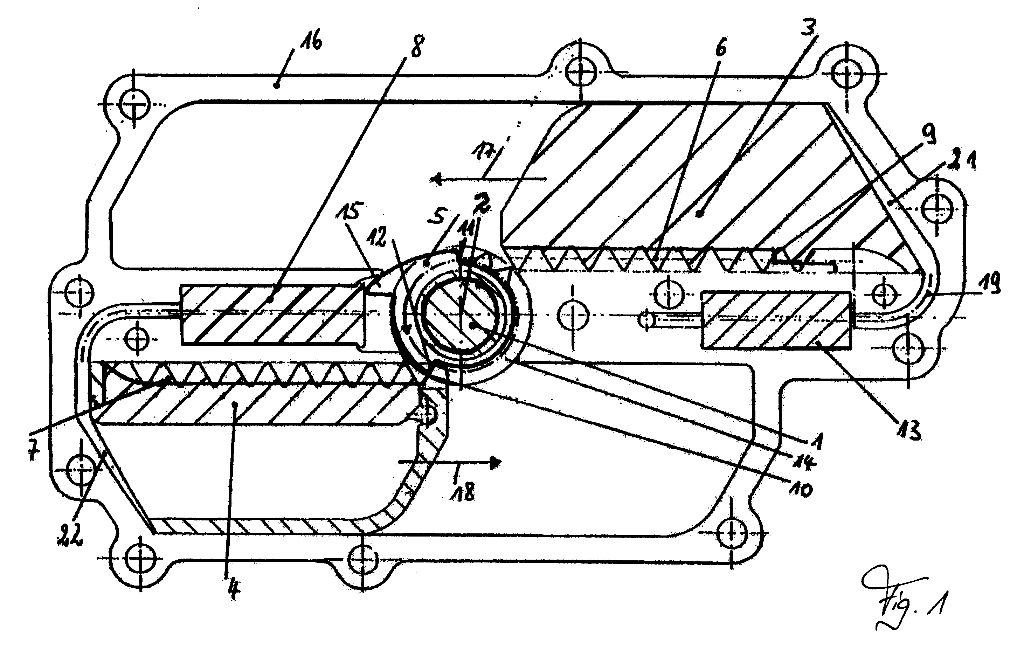

Die Figur 1 zeigt eine teilweise schnittbildliche Darstellung der Vorrichtung zum Drehantrieb einer Wickelwelle eines Sicherheitsgurtaufrollers. Diese bevorzugt zum Straffen eines Sicherheitsgurtes dienende Vorrichtung besitzt ein Ritzel 1, das in Drehantriebsverbindung mit der nicht näher dargestellten Wickelwelle des Gurtaufrollers steht. Diese Antriebsverbindung kann über ein insbesondere in Schnelle übersetzendes Getriebe hergestellt sein, oder das Ritzel 1 kann drehfest mit der Wickelwelle verbunden sein, wobei dann eine Achse 2 des Ritzels 1 mit der Achse der Wickelwelle zusammenfällt. In einem Gehäuse 16 sind zwei Antriebskörper 3 und 4 wie Kolben linear beweglich (Pfeilrichtungen 17 und 18) geführt. Die Antriebskörper 3 und 4 besitzen Verzahnungen 6 und 7. Diese Verzahnungen können in Eingriff kommen mit einer Verzahnung 14 am Ritzel 1. Die beiden Antriebskörper 3 und 4 werden zu unterschiedlichen Zeiten pyrotechnisch angetrieben. Für den pyrotechnischen Antrieb des Antriebskörpers 3 ist ein Gasgenerator 13 und für den pyrotechnischen Antrieb des Antriebskörpers 4 ist ein Gasgenerator 8 vorgesehen. Die Gasgeneratoren erzeugen bei Zündung ihrer Treibladungen ein Druckgas, das über Druckgaskanäle 19 und 20 in Druckräume 21, 22 für den Antrieb der Antriebskörper 3 und 4 in ihre Bewegungsrichtungen 17 und 18 geleitet wird.

Der in der zeitlichen Aufeinanderfolge zuerst angetriebene Antriebskörper 3 besitzt in Bewegungsrichtung 17 gesehen am Ende der Verzahnung 6 eine Steuerkante 9. Diese Steuerkante 9 kann mit einer ersten Steuerkante 11 an einem im dargestellten Ausführungsbeispiel als Synchronscheibe 5 ausgebildeten Bewegungsübertragungsmittel in Eingriff kommen. Die Synchronscheibe 5 ist drehbar um die Ritzelachse 2 unabhängig von der Drehbewegung des Ritzels 1 gelagert.

Die Synchronscheibe 5 besitzt eine zweite Steuerkante 12, die an einer Steuerkante 10 des zweiten Antriebskörpers 4 anliegt bzw. zur Anlage gebracht werden kann. Die Steuerkante 10 befindet sich am Anfang der Verzahnung 7 des Antriebskörpers 4.

Die dargestellte Vorrichtung arbeitet wie folgt:

Bei überhöhter Beschleunigung oder Abbremsung des Kraftfahrzeugs wird durch eine nicht näher dargestellte Sensoreinrichtung die Zündung des Gasgenerators 13 veranlaßt. Das vom Gasgenerator erzeugte Druckgas 13 strömt in den Druckraum 21 und treibt den Antriebskörper 3 in Antriebsrichtung 17 an. Dabei kommt die Verzahnung 6 am Antriebskörper 3 mit der Verzahnung 14 des Ritzels 1 in Eingriff, und das Ritzel 1 wird gedreht. Diese Drehbewegung wird auf die nicht näher dargestellte Wickelwelle zum Straffen des Gurtbandes übertragen.

Am Ende der Antriebsbewegung des Antriebskörpers 3 kommt die Steuerkante 9 mit der Steuerkante 11 an der Synchronscheibe 5 in Eingriff, so daß bei der weiteren Antriebsbewegung des Antriebskörpers 3 die Synchronscheibe 5 um die Achse 2 gedreht wird. Die Drehbewegung der Synchronscheibe 5 wird auf den zweiten Antriebskörper 4 übertragen. Dies erfolgt aufgrund des Eingriffs der zweiten Steuerkante 12 an der Synchronscheibe 5 mit der Steuerkante 10 am Antriebskörper 4. Der Antriebskörper 4 wird dadurch in Richtung seiner Antriebsbewegung 18 verschoben bis seine Verzahnung 7 synchron mit der Verzahnung 14 des Ritzels 10 in Eingriff kommt. Die Steuerkanten 9 und 10 an den Antriebskörpern 3 und 4 sowie die Steuerkanten 11 und 12 besitzen solche Positionen, daß der synchrone Eingriff der Verzahnung 7 in die Verzahnung 14 bei der Übertragung der Antriebsbewegung des Antriebskörpers 3 den zweiten Antriebskörper 4 durch die erzeugte synchrone Eingriffsbewegung gewährleistet wird.

Sobald der synchrone Eingriff der Verzahnung 7 in die Verzahnung 14 des Ritzels 1 hergestellt ist, wird der Gasgenerator 8 gezündet. Dies kann beispielsweise durch Druckzündung, wie sie in der EP 0 629 531 A1 beschrieben ist, erfolgen oder mechanische und/oder elektrische Zündung des Gasgenerators 8 mit Hilfe eines Zündbetätigungsansatzes 15 an der Synchronscheibe 5. Die Primärzündung des Gasgenerators 13 kann mechanisch oder elektrisch in bekannter Weise erfolgen.

Die Erfindung ist verwendbar bei solchen pyrotechnischen Drehantrieben, bei denen mehrere Antriebskörper in zeitlicher Aufeinanderfolge mit einem Antriebsritzel in Drehantriebsverbindung gebracht werden. Die Antriebskörper können dabei wie beim dargestellten Ausführungsbeispiel auf geradlinigen Bahnen oder auf gekrümmten und kreisförmigen Bahnen, wie es aus der EP 0 629 531 A1 bekannt ist, angetrieben werden. Es können auch mehr als zwei Antriebskörper nacheinander synchron mit dem Antriebsritzel 1 in Eingriff gebracht werden.

Beim dargestellten Ausführungsbeispiel wird durch die Winkelpositionierung der ersten und zweiten Steuerkanten 11 und 12 am als Synchronscheibe 5 ausgebildeten Bewegungsübertragungsmittel sowie durch die entsprechende Positionierung der Steuerkante 9 am Antriebskörper 3 sowie die Positionierung der Steuerkante 10 am Antriebskörper 4 gegenüber der Verzahnung 7 gewährleistet, daß bei vom Antriebskörper 3 angetriebenem Antriebsritzel 1 der Anfang der Verzahnung 7 des Antriebskörpers 4 durch die von der Synchronscheibe 5 bewirkte Bewegungsübertragung synchron in Eingriff mit der Verzahnung 14 am Ritzel 1 gebracht wird.

Das Antriebsritzel 1 sowie die Verzahnungen 6 und 7 bestehen bevorzugt aus hochwertigen Materialien, beispielsweise Stahl. Die Verzahnungen 6, 7 des Ausführungsbeispiels der Figur 1 können als Zahnstangen ausgebildet sein, welche mit Formschluß in die Antriebskörper 3, 4 eingesetzt sind. Das Material der Antriebskörper kann weicher ausgebildet sein als das Material der die Verzahnungen 6, 7 bildenden Zahnstangen. Das Material der Antriebskörper kann beispielsweise Aluminium sein.

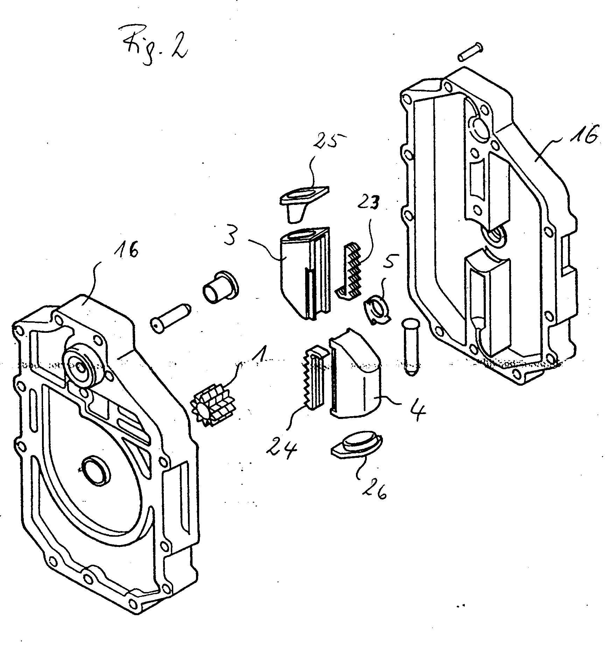

Bei dem in der Figur 2 dargestellten Ausführungsbeispiel sind die Verzahnungen 6, 7 ebenfalls als Zahnstangen 23 und 24 ausgebildet, welche aus mehreren nebeneinander gelegten scheibenförmigen Stanzteilen, insbesondere aus Bandstahl, bestehen. Auch das Ritzel 1 kann aus mehreren nebeneinander geordneten scheibenförmigen Stanzteilen, insbesondere aus Bandstahl, bei der in der Figur 2 gezeigten Ausführungsform bestehen. Auch bei dem in der Figur 2 dargestellten Ausführungsbeispiel sind die Scheiben der Zahnstangen 23 und 24 nebeneinander mit Formschluß im kolbenförmigen Antriebskörper gehalten. Auf die Antriebskörper 3, 4 können Dichtungskappen 25 und 26 zur Abdichtung der Druckräume 21, 22 aufgesetzt sein. Diese Dichtungskappen bestehen bevorzugt aus Kunststoff.

## Patentansprüche

1. Vorrichtung zum Drehantrieb einer Wickelwelle eines Sicherheitsgurtaufrollers in Aufwickelrichtung mit wenigstens zwei in zeitlicher Aufeinanderfolge pyrotechnisch antreibbaren Antriebskörpern, die für jeweilige kraftschlüssige Antriebsverbindungen mit der Wickelwelle in der zeitlichen Aufeinanderfolge am Aufrollautomaten geführt sind,
dadurch **gekennzeichnet,**
daß ein Bewegungsübertragungsmittel (5) einen Teil der Antriebsbewegung eines jeweils angetriebenen Antriebskörpers (3) auf den zeitlich nachfolgend angetriebenen Antriebskörper (4) für dessen synchrone kraftschlüssige Antriebsverbindung mit der angetriebenen Wickelwelle überträgt.

2. Vorrichtung nach Anspruch 1, dadurch gekennzeichnet, daß das Bewegungsübertragungsmittel (5) den letzten Teil der Antriebsbewegung des angetriebenen Antriebskörpers (3) auf den nachfolgend angetriebenen Antriebskörper (4) überträgt.

3. Vorrichtung nach Anspruch 1 oder 2, dadurch gekennzeichnet, daß das Bewegungsübertragungsmittel (5) die Bewegung zeitlich vor dem pyrotechnischen Antrieb des nachfolgend angetriebenen Antriebskörpers überträgt.

4. Vorrichtung nach einem der Ansprüche 1 bis 3, dadurch gekennzeichnet, daß das Bewegungsübertragungsmittel (5) als ein drehbares Teil ausgebildet ist.

5. Vorrichtung nach einem der Ansprüche 1 bis 4, dadurch gekennzeichnet, daß der Kraftschluß zwischen den Antriebskörpern (3,4) und der Wickelwelle (1) durch Zahneingriff herstellbar ist.

6. Vorrichtung nach einem der Ansprüche 1 bis 5, dadurch gekennzeichnet, daß der Zahneingriff von Verzahnungen (6, 7) an den Antriebskörpern (3, 4) und wenigstens einer Verzahnung (14) an einem mit der Wickelwelle in Drehverbindung stehendem Ritzel (1) gebildet ist.

7. Vorrichtung nach Anspruch 4 und 6, dadurch gekennzeichnet, daß das Bewegungsübertragungsmittel (5) um eine Achse (2) des Ritzels (1) drehbar ist.

8. Vorrichtung nach einem der Ansprüche 1 bis 7, dadurch gekennzeichnet, daß am Bewegungsübertragungsmittel (5) eine mechanische Zünderbetätigungseinrichtung (15) vorgesehen ist.

9. Vorrichtung nach einem der Ansprüche 1 bis 8, dadurch gekennzeichnet, daß an den beiden Antriebskörpern (3, 4) in bestimmten Positionen Eingriffsstellen (9, 10) vorgesehen sind, die mit in bestimmten Winkelpositionen am drehbaren Bewegungsübertragungsmittel (5) vorgesehenen Eingriffsstellen (11, 12) in bewegungsübertragende Eingriffe bringbar sind.

10. Vorrichtung nach einem der Ansprüche 1 bis 9, dadurch gekennzeichnet, daß die Verzahnungen (6, 7) durch Zahnstangen (23, 24) aus einem härteren Material als die Antriebskörper (3, 4) gebildet und mit Formschluß in die Antriebskörper (3, 4) eingesetzt sind.

11. Vorrichtung nach Anspruch 10, dadurch gekennzeichnet, daß jede Zahnstange (23, 24) aus mehreren nebeneinander gelegten scheibenförmigen Stanzteilen gebildet ist.

12. Vorrichtung nach einem der Ansprüche 1 bis 11, dadurch gekennzeichnet, daß das Ritzel (1) aus mehreren nebeneinander angeordneten scheibenförmigen Stanzteilen gebildet ist.

## Claims

1. A device for the rotary drive of a winding shaft of a safety belt retractor in the winding-on direction comprising at least two drive bodies which are pyrotechnically drivable in succession in respect of time and which are guided for respective force-locking drive connections to the winding shaft in succession in respect of time on the automatic retraction unit, characterised in that a motion-transmission means (5) transmits a part of the drive movement of a respectively driven drive body (3) to the drive body (4) which is driven subsequently in respect of time, for synchronous force-locking drive connection thereof to the driven winding shaft.

2. A device according to claim 1 characterised in that the motion-transmission means (5) transmits the last part of the drive movement of the driven drive body (3) to the subsequently driven drive body (4).

3. A device according to claim 1 or claim 2 characterised in that the motion-transmission means (5) transmits the movement in respect of time prior to the pyrotechnic drive of the subsequently driven drive body.

4. A device according to one of claims 1 to 3 characterised in that the motion-transmission means (5) is in the form of a rotatable member.

5. A device according to one of claims 1 to 4 characterised in that the force-locking connection between the drive bodies (3, 4) and the winding shaft (1) can be produced by tooth engagement.

6. A device according to one of claims 1 to 5 characterised in that the tooth engagement is formed by tooth arrangements (6, 7) on the drive bodies (3, 4) and at least one tooth arrangement (14) on a pinion (1) which is rotationally connected to the winding shaft.

7. A device according to claim 4 and claim 6 characterised in that the motion-transmission means (5) is rotatable about an axis (2) of the pinion (1).

8. A device according to one of claims 1 to 7 characterised in that provided on the motion-transmission means (5) is a mechanical fuse actuating means (15).

9. A device according to one of claims 1 to 8 characterised in that provided on the two drive bodies (3, 4) in given positions are engagement locations (9, 10) which can be brought into motion-transmitting engagements with engagement locations (11, 12) provided in given angular positions on the rotatable motion-transmission means (5).

10. A device according to one of claims 1 to 9 characterised in that the tooth configurations (6, 7) are formed by racks (23, 24) comprising a harder material than the drive bodies (3, 4) and are fitted in positively locking relationship into the drive bodies (3, 4).

11. A device according to claim 10 characterised in that each rack (23, 24) is formed from a plurality of plate-shaped stamped portions which are disposed in mutually juxtaposed relationship.

12. A device according to one of claims 1 to 11 characterised in that the pinion (1 ) comprises a plurality of plate-shaped stamped portions which are disposed in mutually juxtaposed relationship.

## Revendications

1. Dispositif de mise en rotation d'un arbre d'enroulement d'un enrouleur de ceinture de sécurité dans le sens d'enroulement, comportant au moins deux corps d'entraînement pouvant être mis en mouvement successivement par voie pyrotechnique qui, pour des liaisons d'entraînement par force à l'arbre d'enroulement, passent successivement sur le dispositif automatique d'enroulement, caractérisé par le fait qu'un moyen de transmission de mouvement (5) transmet une partie du mouvement d'entraînement d'un corps d'entraînement mis en mouvement (3) au corps d'entraînement mis en mouvement après (4) pour la liaison d'entraînement par force synchrone de celui-ci à l'arbre d'enroulement entrainé.

2. Dispositif selon la revendication 1, caractérisé par le fait que le moyen de transmission de mouvement (5) transmet la dernière partie du mouvement d'entraînement du corps d'entraînement mis en mouvement (3) au corps d'entraînement mis en mouvement après (4).

3. Dispositif selon l'une des revendications 1 et 2, caractérisé par le fait que le moyen de transmission de mouvement (5) transmet le mouvement avant la propulsion pyrotechnique du corps d'entraînement mis en mouvement après.

4. Dispositif selon l'une des revendications 1 à 3, caractérisé par le fait que le moyen de transmission de mouvement (5) est un élément tournant.

5. Dispositif selon l'une des revendications 1 à 4, caractérisé par le fait que la liaison par force entre les corps d'entraînement (3, 4) et l'arbre d'enroulement (1) est réalisée par engrènement de dents.

6. Dispositif selon l'une des revendications 1 à 5, caractérisé par le fait que l'engrènement de dents est formé par des dentures (6, 8) des corps d'entraînement (3, 4) et au moins une denture (14) d'un pignon (1) en liaison de rotation avec l'arbre d'enroulement.

7. Dispositif selon les revendications 4 et 6, caractérisé par le fait que le moyen de transmission de mouvement (5) peut tourner autour de l'axe (2) du pignon (1).

8. Dispositif selon l'une des revendications 1 à 7, caractérisé par le fait que sur le moyen de transmission de mouvement (5) est prévu un dispositif mécanique d'actionnement d'amorce (15).

9. Dispositif selon l'une des revendications 1 à 8, caractérisé par le fait que sur les deux corps d'entraînement (3, 4) sont prévus dans des positions déterminées des endroits de mise en prise (9, 10) qui peuvent être mis en prise de transmission de mouvement avec des endroits de mise en prise (11, 12) prévus dans des positions angulaires déterminées sur le moyen tournant de transmission de mouvement (5).

10. Dispositif selon l'une des revendications 1 à 9, caractérisé par le fait que les dentures (6, 7) sont formées par des crémaillères (23, 24) faites d'une matière plus dure que celle des corps d'entraînement (3, 4) et sont emboîtées dans ces derniers.

11. Dispositif selon la revendication 10, caractérisé par le fait que chaque crémaillère (23, 24) est formée de plusieurs pièces en forme de plaque découpées placées les unes à côté des autres.

12. Dispositif selon l'une des revendications 1 à 11, caractérisé par le fait que le pignon (1) est formé de plusieurs pièces en forme de plaque découpées placées les unes à côté des autres.
